# EUROPEAN PATENT SPECIFICATION

(11) **EP 4 375 009 B1**
(45) Date of publication and mention of the grant of the patent: **09.07.2025**
(21) Application number: 23210865.4
(22) Date of filing: 20.11.2023
(51) Int. Cl.: B23Q 11/00, B26D 7/18, B26D 3/16, B65G 21/00, B65G 21/06, B65G 15/62

(54) **A REMOVAL DEVICE FOR REMOVING WASTE PRODUCTS FROM AN APPARATUS**
ENTFERNUNGSVORRICHTUNG ZUM ENTFERNEN VON ABFALLPRODUKTEN AUS EINER VORRICHTUNG
DISPOSITIF D'ENLÈVEMENT POUR ENLEVER DES DÉCHETS D'UN APPAREIL

(30) Priority: 22.11.2022 IT 202200023994
(43) Date of publication of application: 29.05.2024
(73) Proprietor: Emmegi S.p.A., 41019 Soliera (Modena) (IT)
(72) Inventor: MARTINELLI, Claudio, 41019 SOLIERA (MODENA) (IT); ZAFFIGNANI, Denis, 29010 PONTENURE (PIACENZA) (IT)
(74) Representative: Colò, Chiara

(56) References cited:
- CN-A- 107 900 767
- CN-A- 113 233 100
- KR-A- 20190 042 886
- US-A1- 2016 167 885

## Description

The invention relates to a removal device for removing waste products from an apparatus, the apparatus being intended to machine profiled bars. The apparatus on which the removal device is intended to be installed may be a numerically controlled machine tool, in particular a machining centre. The apparatus on which the removal device is intended to be installed is configured to perform operations on the profiled bars which involve the removal of chippings, for example drilling, milling, cutting operations or the like.

The waste products which the removal device allows to be moved away from the apparatus may be chippings generated whilst the profiled bars are machined, or pieces of profiled bars which are rejected after being cut, or the like.

The profiled bars may be made of metallic materials, for example aluminium, or synthetic polymeric materials, for example polyvinyl chloride (PVC), or composite materials.

The invention furthermore relates to an apparatus for machining profiled bars, comprising a removal device for removing waste products.

When the profiled bars are machined on the prior art apparatuses, waste products are generated which have to be removed from the apparatus.

Manually removing the waste products from the apparatuses for machining profiled bars is a lengthy operation, not very safe and not at all comfortable for the operator. For this reason, removal devices have been developed for automatically removing the waste products from the apparatuses for machining profiled bars, so as to limit the interventions of the operators.

The prior art removal devices comprise a conveyor belt, made of rubber, which passes beneath a work plane on which the profiled bars are supported whilst they are machined. The waste products, generated when each profiled bar interacts with one or more tools generally positioned above the work plane, fall on the conveyor belt, which is moved in such a way as to move the waste products away from the apparatus. The conveyor belt is wound around a motorized roller and a driven roller, which are located at two opposite ends of the path of the conveyor belt.

An intermediate plane having a monolithic structure is interposed between a lower branch and an upper branch of the belt in order to support the upper branch, on which the waste products fall.

Since the apparatus has a significant longitudinal dimension, as it is designed for machining profiled bars which are several metres long, the lower branch and the upper branch of the conveyor belt - as well as the intermediate plane - also have a significant length, which may be about ten metres or more. In effect, the conveyor belt extends substantially for the entire length of the apparatus for machining the profiled bars, so as to effectively remove the waste products.

In the prior art removal devices, the conveyor belt is supported by an autonomous supporting structure, which includes the intermediate plane, the motorized roller and the driven roller. The supporting structure, together with the conveyor belt supported by it, therefore acts like an independent unit.

A drawback of the prior art removal devices is that it is difficult to perform maintenance operations on the removal device, in particular maintenance operations which require the removal of the conveyor belt. It is in effect difficult to pull the conveyor belt out from the supporting structure, in particular due to the intermediate plane which prevents significant deformation of the conveyor belt during the removal operations.

Moreover, in order to extract the conveyor belt from the apparatus for machining profiled bars, a free space equal to the length of the path of the conveyor belt must be available in front of the apparatus. This length is normally greater than the length of the apparatus, because the conveyor belt extends through the entire apparatus and protrudes downstream and upstream of the latter, so as to be wound on the motorized roller and on the driven roller, which are normally arranged outside the apparatus.

The situation is made more difficult due to the length of the apparatus, and hence the length of the conveyor belt, which is particularly bulky and difficult to handle when the apparatus has to be removed.

Moreover, the removal device is located inside the apparatus, in an operating zone closed by a safety hatch, so that it is not easy to access the conveyor belt when the apparatus for machining profiled bars is inserted in a production line and installed in a factory, possibly together with other machines or plants.

Lastly, since the supporting structure acts like an autonomous unit, it is not easy to remove the motorized roller and the driven roller, which are positioned inside the supporting structure and can only be removed after having disassembled a large number of components.

Due to the large dimensions of the supporting structure and the monolithic shape of the intermediate plane, it is not easy to ship the removal device to a production plant in which the apparatus for machining profiled bars is installed. In effect, it is necessary to use particularly bulky packaging and to deal with high shipping costs.

Some examples of prior art apparatuses are disclosed in CN 107900767, KR 2019-0042886 , both disclosing the features of the preamble of claim 1, and US 2016/167885.

An object of the invention is to improve the apparatuses for machining profiled bars, in particular with regard to the possibility of automatically moving away waste products from the tools which generated them.

A further object is to improve the maintenance operations on the apparatuses for machining the profiled bars, in particular as regards the parts of such apparatuses intended to remove waste products generated whilst the profiled bars are machined.

Another object is to provide a removal device for removing waste products from an apparatus for machining profiled bars, on which it is easy to perform maintenance operations.

Another object is to provide a removal device for removing waste products from an apparatus for machining profiled bars, comprising a conveyor belt which can be easily removed from the apparatus in order to perform maintenance operations.

A further object is to provide a removal device for removing waste products from an apparatus for machining profiled bars, which can be easily transported and dispatched.

According to the invention, there is provided a removal device for removing waste products from an apparatus for machining profiled bars, the removal device comprising a conveyor belt for transporting the waste products to an unloading zone along an advancement direction, the conveyor belt comprising a belt made of a synthetic polymeric material, the removal device further comprising at least two end rollers on which the conveyor belt is wound so as to define an upper branch of the conveyor belt interposed between the two end rollers and a lower branch of the conveyor belt positioned below the upper branch, a supporting plane being positioned below the upper branch to provide support for the waste products transported by the conveyor belt, wherein the supporting plane is defined by a plurality of supporting modules positioned one alongside the other along the advancement direction, each supporting module being configured to be removed from the supporting plane independently of the adjacent supporting module.

When it is necessary to remove the conveyor belt to perform maintenance operations on the removal device, it is possible to remove one or more support modules in such a way as to free space inside the space surrounded by the conveyor belt. Removing one supporting module at a time is a simplified operation with respect to removing the entire supporting plane as occurred in the prior art, because the supporting modules have reduced dimensions with respect to the supporting plane and can therefore be handled and moved away from the apparatus more easily. Moreover, by removing one or more supporting modules, it is possible to rapidly provide a free space in which the conveyor belt can be temporarily housed whilst it is deformed for being extracted from the machine. In this way, the conveyor belt may be removed from the apparatus for machining profiled bars even by removing a limited number of supporting modules, that is, even without removing all the supporting modules which define the supporting plane.

The removal device according to the invention can be easily transported and shipped, since the components of the removal device, in a disassembled configuration of the latter, may be packaged in individual packages which are relatively simple to handle.

In an embodiment, a first roller of the end rollers is a motorized roller included in a drive unit, the drive unit comprising a motor and being removably fixable to a base of the apparatus for machining profiled bars.

In an embodiment, a second roller of the end rollers is a driven roller included in a driven unit, the driven unit being removably fixable to a base of the apparatus for machining profiled bars.

The drive unit and the driven unit are independent of each other.

The drive unit is a compact, independent unit, which can be removed from the apparatus for machining profiled bars in an easy manner, without intervening on other components.

The driven unit is also a compact and independent unit, which is easy to remove from the apparatus for machining profiled bars.

This makes it easier to remove the conveyor belt from the apparatus for machining profiled bars. After removing one or more supporting modules, the drive unit and the driven unit, the conveyor belt can, in effect, be folded and easily extracted from the apparatus for machining profiled bars.

In an embodiment, the supporting modules form a treadable plane on which the operator can stand to perform maintenance or cleaning operations on the apparatus for machining profiled bars, particularly after having removed the conveyor belt.

In this way, the operator can easily access the components positioned inside the apparatus for machining profiled bars, for example the operating heads, even if the removal device is present.

In an embodiment, at least one supporting module has a protrusion, which projects from an end zone of the supporting module and extends transversely, for example perpendicularly, to the advancement direction, so as to engage in a seat of an adjacent supporting module.

By coupling the protrusion of a supporting module to the seat of an adjacent supporting module, the supporting module may be securely anchored to the adjacent supporting module, during operation of the apparatus for machining profiled bars.

The invention can be better understood and implemented with reference to the accompanying drawings which illustrate some non-limiting example embodiments of it and in which:
Figure 1 is a perspective and schematic view of a removal device for removing waste products from an apparatus for machining profiled bars;
Figure 2 is a perspective view of a removal device like that of Figure 1, installed on an apparatus for machining profiled bars, showing a part of a base of the apparatus;
Figure 3 is a perspective view, enlarged and interrupted, of an end zone of a removal device like that of Figure 1, installed on an apparatus for machining profiled bars;
Figure 4 is a side view from the direction D of Figure 3;
Figure 5 is an enlarged cross section showing a supporting plane which supports a conveyor belt of the removal device of Figure 1, taken on a plane parallel to an advancement direction of the conveyor belt;
Figure 6 is a perspective view showing a removal device according to an alternative embodiment.

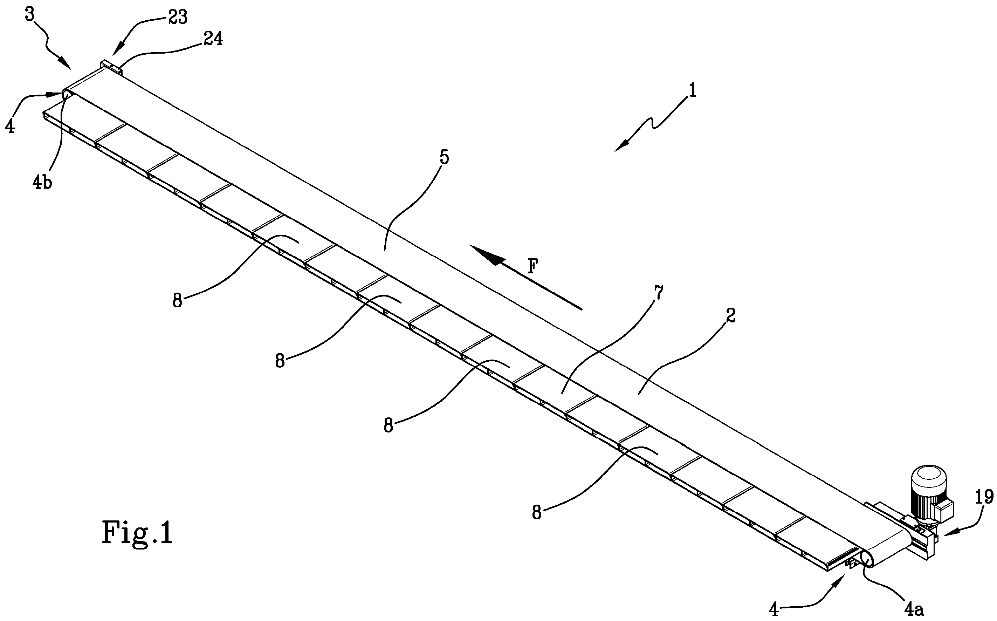

Figure 1 schematically shows a removal device 1 designed to be mounted on an apparatus for machining profiled bars. The latter may be made of metallic material, for example aluminium, or synthetic polymeric material, for example polyvinyl chloride (PVC), or composite material, or others.

The apparatus for machining profiled bars is configured to perform operations on the profiled bars which involve the removal of chippings, for example cutting, drilling, milling or other operations. During these operations, waste products are generated, for example chippings or parts of profiled bars which are rejected because they are too short to be subsequently used.

The removal device 1 allows the waste products to be removed from the apparatus for machining profiled bars. For this purpose, the removal device 1 comprises a conveyor belt 2 movable in an advancement direction F for transporting the waste products towards an unloading zone 3. The conveyor belt 2 is intended to be installed in a lower region of the apparatus for machining profiled bars, under a work plane on which the profiled bars are supported while they are machined. Above the work plane, one or more operating heads are arranged, the one or more operating heads supporting one or more work tools for machining the profiled bars. The waste products which are generated when the profiled bars are machined fall by gravity on the conveyor belt 2 to be transported towards the unloading zone 3.

The drawings show only a portion of the conveyor belt 2 having a width less than the actual width of the conveyor belt 2, so as to make more easily visible some components positioned inside the removal device.

The conveyor belt 2 is made of synthetic polymeric material, for example rubber, polyurethane, polyvinyl chloride (PVC), elastomeric material or other. According to the example shown, the conveyor belt 2 is a continuous belt wound around in a loop, that is to say, it is not formed by links connected to each other. The continuous belt may be produced directly in the form of a sleeve, or it may be produced starting from a flat strip the ends of which are joined to each other to obtain a belt closed in the form of a loop. In other words, the conveyor belt 2 comprises a single-piece belt, whether it is produced directly as a closed loop or formed as a strip the ends of which are joined, in a permanent or removable manner.

In Figure 1, the advancement direction F is shown as directed from right to left. It is understood that the advancement direction F could also be directed from left to right, depending on the configuration of the apparatus for machining profiled bars.

The removal device 1 also comprises two end rollers 4, on which the conveyor belt 2 is wound. According to the example shown, only two end rollers 4 are provided and no intermediate rollers are provided. In an alternative embodiment, the conveyor belt 2 could be wound on a number of rollers greater than two.

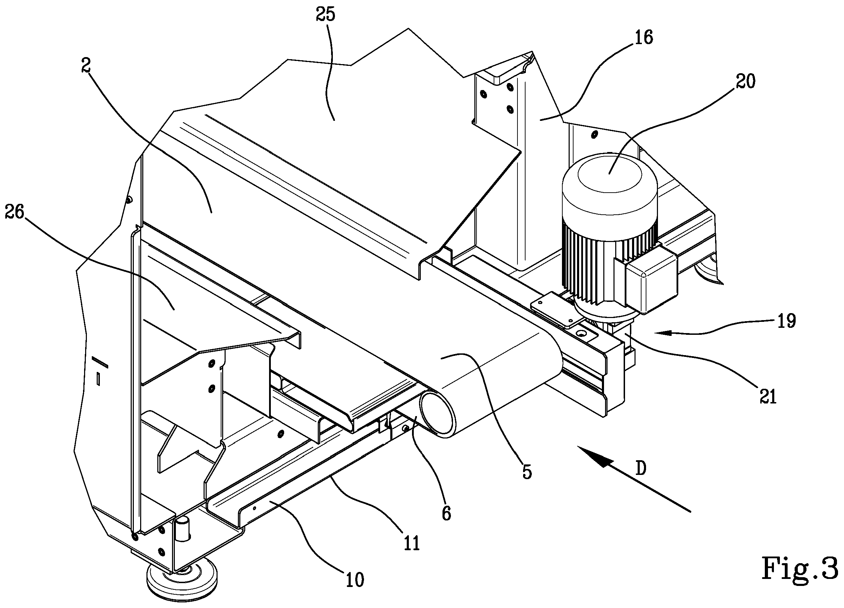

Between the end rollers 4 an upper branch 5 and a lower branch 6 of the conveyor belt 2 are defined, which can be seen for example in Figure 3. The upper branch 5 defines a transport plane on which the waste products fall for being transported towards the unloading zone 3. The lower branch 6 is positioned below the upper branch 5.

The upper branch 5 lies on a horizontal plane. However, this condition is not necessary, since the upper branch 5 could also be inclined relative to the horizontal direction.

According to the example shown, the lower branch 6 also lies on a horizontal plane and is therefore parallel to the upper branch 5. This condition is also not mandatory and, in an alternative embodiment, the lower branch 6 might be inclined relative to the horizontal direction and/or be positioned not parallel to the upper branch 6.

A supporting plane 7 is provided below the upper branch 5 for supporting the waste products which are transported by the conveyor belt 2. The waste products may also have a significant weight and, if the support plane 7 were not present, they could deform the conveyor belt 2 and make it unable to operate correctly.

The supporting plane 7 is interposed between the upper branch 5 and the lower branch 6.

As shown in Figure 1, the supporting plane 7 comprises a plurality of supporting modules 8, positioned alongside each other along the advancement direction F. In other words, the supporting modules 8 are positioned in sequence along the advancement direction F.

According to the example shown, the supporting modules 8 have a substantially quadrangular shape in plan view, for example a substantially rectangular shape, and are positioned side by side along a long side of the rectangle. However, this condition is not necessary and other embodiments could also be adopted for the supporting modules 8.

The supporting modules 8 may have a shape like a slab. In other words, each supporting module 8 may have a base and a height, the height being less than the linear dimensions of the base.

The supporting modules 8 are mounted on the apparatus for machining profiled bars in such a way that each of them is easily removable, independently of the other supporting modules 8. In other words, each supporting module 8 may be detached, that is to say, removed from the supporting plane 7, without removing the adjacent supporting modules 8.

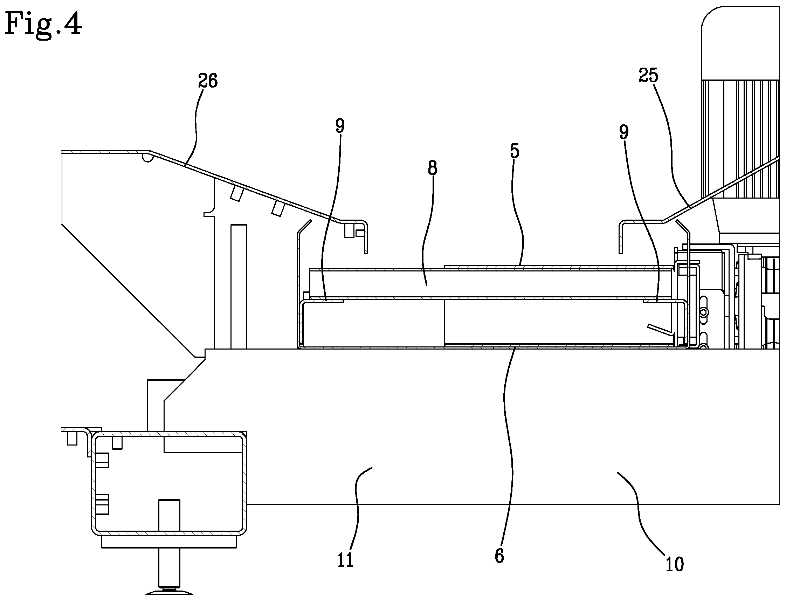

As shown in Figures 3 and 4, the apparatus for machining profiled bars comprises a base 10 which includes a vertical structure 16, shown only partly in Figure 3, arranged to support one or more operating heads and other components of the apparatus. The base 10 further comprises a lower protrusion 11, which projects frontally from a lower region of the base 10.

A pair of resting bodies 9 are arranged in a fixed position relative to the base 10. According to the example shown, the resting bodies 9 are supported by the lower projection 11 of the base 10.

The resting bodies 9 may extend longitudinally in a direction parallel to the advancement direction F.

Each supporting module 8 rests on the resting bodies 9. In particular, each supporting module 8 has a rear end, facing towards the inside of the apparatus for machining profiled bars, which rests on the resting body 9 located in a position further inside on the apparatus. Each supporting module 8 also has a front end, facing outwards, which rests on the resting body 9 located in a position further outwards on the apparatus for machining profiled bars.

The resting bodies 9 are an example of a resting structure fixed relative to the base 10 for restingly receiving the supporting modules 8. However, other types of resting structure are possible.

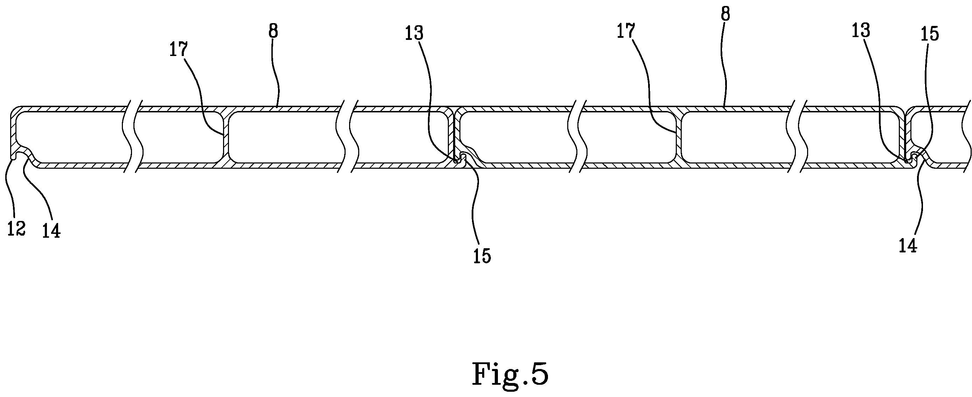

As shown in Figure 5, each supporting module 8 may comprise a protrusion 12, which projects from a first end zone of the supporting module 8 transversely, for example perpendicularly, to the advancement direction F. The protrusion 12 may extend for the entire width of the supporting module 8, measured perpendicularly to the advancement direction F. According to the example shown, the protrusion 12 extends vertically downwards, that is to say, towards the lower branch 6 of the conveyor belt 2, but this condition is not necessary. The protrusion 12 might also have geometries different from that shown in Figure 5.

The protrusion 12 is configured for engaging in a seat 13 of the adjacent supporting module 8. The seat 13 may extend transversely, for example perpendicularly, to the advancement direction **F,** for the entire width of the supporting module 8 measured perpendicularly to the advancement direction F. According to the example shown, the seat 13 is open upwards. Between the protrusion 12 and a main portion of the supporting module 8 a further seat 14 is defined, which in the example shown faces downwards and which extends transversely, for example perpendicularly, to the advancement direction F. The further seat 14 receives a further protrusion 15 which projects from the adjacent supporting module 8. According to the example shown, the further protrusion 15 extends vertically upwards. The further protrusion 15 extends transversely, for example perpendicularly, to the advancement direction F.

The protrusion 12, which engages in the seat 13, and the further protrusion 15, which engages in the further seat 14, define an anchoring profile by means of which the supporting module 8 remains in a stable position relative to the adjacent supporting module 8.

More specifically, the supporting modules 8 which, in an assembled configuration of the supporting plane 7, are interposed between two adjacent supporting modules, have anchoring profiles for anchoring to both the lateral ends, which engage, respectively, with a supporting module 8 positioned upstream and with a supporting module 8 positioned downstream along the advancement direction F. The supporting modules 8 which, in an assembled configuration of the supporting plane 7, are arranged in an end position, and engage only with one supporting module 8, may have an anchoring profile only at the end engaged with an adjacent supporting module 8.

The anchoring profiles may have any shape which is suitable for keeping a supporting module 8 in a fixed position relative to the adjacent supporting modules 8, during operation of the removal device 1.

The anchoring profiles also give stability to the supporting modules 8 when the latter are arranged in an assembled configuration to define the supporting plane 7.

As shown in Figure 5, the supporting modules 8 can be hollow inside to reduce the weight and make the handling easier. In the case of supporting modules 8 having significant dimensions, it is possible to provide stiffening ribs 17 inside each supporting module 8.

The supporting plane 7 defined by the supporting modules 8 may extend below the conveyor belt 2 substantially for the entire length of the upper branch 5, as shown in Figure 1. In this case, the supporting modules 8 substantially occupy the entire space between the end rollers 4, defined in a longitudinal direction.

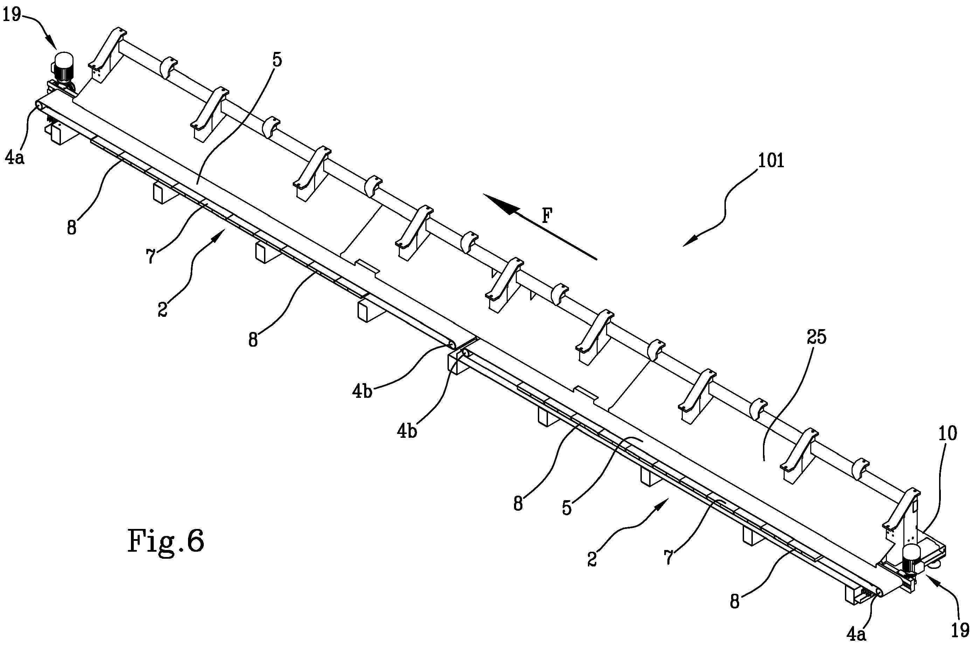

Alternatively, as shown in the example of Figure 6, the supporting plane 7 defined by the supporting modules 8 may have a length less than the length of the upper branch 5.

The supporting modules 8 define a treadable plane on which the operator can stand and walk, for example if it is necessary to perform maintenance operations on the removal device 1 or on the apparatus for machining profiled bars.

A first roller 4a of the end rollers 4 is a motorized roller, which forms part of a drive unit 19 shown for example in Figures 1 and 3. By rotating about a respective longitudinal axis, the motorized roller moves the conveyor belt 2 in the advancement direction F.

The drive unit 19 may comprise a motor 20 for rotating the first roller 4a, optionally a reduction gear unit 21 for connecting the motor 20 to the first roller 4a and a supporting element for supporting the motor 20, the first roller 4a and the reduction gear unit 21, if present. The supporting element is removably fixable to the base 10 of the apparatus for machining profiled bars.

If the supporting element is removed from the base 10, the entire drive unit 19 is detached from the apparatus for machining profiled bars. This helps removal of the conveyor belt 2.

A second roller 4b of the end rollers 4 is a driven roller, that is, a roller free to rotate about a relative longitudinal axis when the conveyor belt 2 is moved. The second roller 4b is included in a driven unit 23, which comprises a supporting member 24 which can be fixed in a removable manner to the base 10. By detaching the supporting member 24 from the base 10, it is possible to remove the entire driven unit 23 from the apparatus for machining profiled bars with a few simple operations.

The drive unit 19 and the driven unit 23 are thus two independent units, which may be removed from the apparatus for machining profiled bars and reassembled on the apparatus separately from each other.

As shown in Figures 3 and 4, above the conveyor belt 2 a rear lateral chute 25 and a front lateral chute 26 may be provided, positioned on opposite sides of the conveyor belt 2 and inclined towards the latter, for conveying the waste products towards the conveyor belt 2 like a funnel.

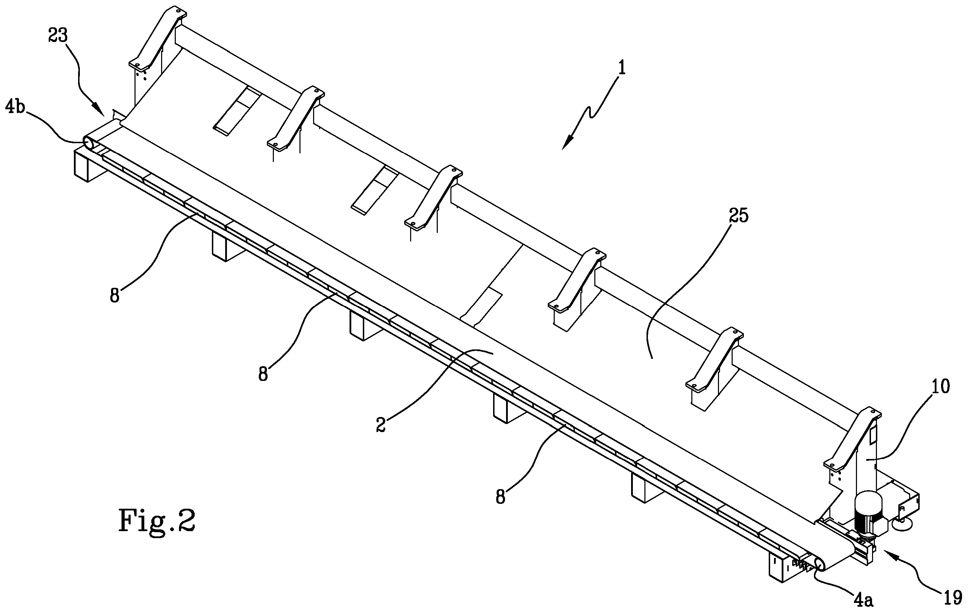

Figure 2 shows an example in which a removal device 1 of the type shown in Figure 1 is mounted on the base 10. The removal device 1 comprises in this case a single conveyor belt 2.

During operation, the profiled bars to be machined are placed on the work plane and the operating heads and/or work tools perform the required operations. The waste products which are generated whilst the profiled bars are machined fall by gravity on the conveyor belt 2. The latter is moved by the drive unit 19 in the advancement direction F and carries the waste products towards the unloading zone 3, moving them away from the apparatus for machining profiled bars.

When it is necessary to perform maintenance or cleaning operations on the apparatus for machining profiled bars, which require removal of the conveyor belt 2, it is possible to remove the drive unit 19 and the driven unit 23 from the base 10. Moreover, some or all of the supporting modules 8 can be detached from the base 10, after which the conveyor belt 2, which at this point is no longer tensioned, may be freely deformed and removed from the apparatus. With the inverse operations, it is possible to refit all the components of the removal device 1.

The supporting modules 8 may be pulled out from the supporting plane 7 for example at an end of the supporting plane 7 close to the drive unit 19 or to the driven unit 23, after the drive unit 19 or, respectively, the driven unit 23 have been removed from the removal device 1. Alternatively, one or more supporting modules 8 can be removed in a central zone of the supporting plane 7.

Figure 6 shows a removal device 101 according to an alternative embodiment. The removal device 101 in this case comprises two conveyor belts 2 positioned one after the other along the advancement direction F.

Each conveyor belt 2 has a respective upper branch 5 supported by a supporting plane 7 in such a way that, during operation, the conveyor belt 2 slides on the supporting plane 7. The supporting plane 7 comprises a plurality of supporting modules 8 of the type described above with reference to Figures 1 and 3 to 5. Each conveyor belt 2 is equipped with a drive unit 19 for rotating a respective motorized roller 4a and a driven unit, not visible in Figure 6, for supporting a respective driven roller 4b. The drive units 19 and the driven units are similar to those described above with reference to Figures 1, 3 and 4 and are removably fixable to the base 10.

According to the example shown, the driven units are positioned at respective facing ends of the corresponding conveyor belt 2. In other words, the ends of the conveyor belts 2 in which the driven units are provided are adjacent to each other and are positioned in a central zone of the removal device 101. The central zone may define an accessibility zone in which it is possible to perform maintenance, removal and similar operations of the removal device 101.

The drive units 19, on the other hand, are positioned at respective outer ends of the conveyor belts 2, that is to say, in opposite peripheral regions of the removal device 101.

The removal device 101 may be used, for example, in combination with apparatuses for machining profiled bars which are particularly long, in which case a single conveyor belt 2 may be more difficult to control.

The removal device 101 operates and can be removed in a similar manner to that described above with reference to the removal device 1.

## Claims

1. A removal device for removing waste products from an apparatus for machining profiled bars, the removal device (1; 101) comprising at least one conveyor belt (2) movable along an advancement direction (F) for transporting the waste products to an unloading zone (3), the removal device (1; 101) further comprising at least two end rollers (4) on which the conveyor belt (2) is wound so as to define an upper branch (5) of the conveyor belt (2) interposed between the two end rollers (4) and a lower branch (6) of the conveyor belt (2) positioned below the upper branch (5), a supporting plane (7) being provided below the upper branch (5) to provide support for the waste products transported by the conveyor belt (2), **characterised in that** the conveyor belt (2) comprises a belt made of a synthetic polymeric material, and **in that** the supporting plane (7) is defined by a plurality of supporting modules (8) positioned one alongside the other along the advancement direction (F), each supporting module (8) being configured to be removed from the supporting plane (7) independently of the adjacent supporting module (7), and wherein each supporting module (8) comprises at least one anchoring profile acting in conjunction with a further anchoring profile of an adjacent supporting module (8), so that the supporting module (8) is kept in contact with the adjacent supporting module (8) whilst the conveyor belt (2) is moved, the anchoring profile comprising at least one protrusion (12) which extends along an edge of the supporting module (8) transversely to the advancement direction (F) for engaging with a seat (13) of the adjacent supporting module (8).

2. The device according to claim 1, wherein each supporting module (8) is hollow inside and optionally comprises at least one stiffening rib (17).

3. The removal device according to claim 1 or 2, wherein the supporting modules (8) define a treadable plane on which an operator can stand.

4. The removal device according to any preceding claim, wherein a first roller (4a) of the end rollers (4) is a motorized roller included in a drive unit (19), the drive unit (19) comprising a motor (20) and being removably fixable to a base (10) of the apparatus for machining profiled bars.

5. The removal device according to claim 4, wherein a second roller (4b) of the end rollers (4) is a driven roller included in a driven unit (23), the driven unit (23) being removably fixable to the base (10) of the apparatus for machining profiled bars.

6. The removal device according to any preceding claim, wherein each supporting module (8) has a slab-like structure.

7. An apparatus for machining profiled bars, comprising at least one working head for machining a profiled bar and a supporting element for supporting the profiled bar whilst the profiled bar is machined, the apparatus further comprising a removal device (1; 101) according to any preceding claim, the conveyor belt (2) of the removal device (1; 101) being positioned below the supporting element for receiving the waste products generated whilst the profiled bar is machined.

8. The apparatus according to claim 7, and further comprising a base (10) having a resting structure for restingly receiving the supporting modules (8).

9. The apparatus according to claim 8, wherein the resting structure comprises a pair of resting bodies (9) which extend parallel to the advancement direction (F) for restingly receiving, respectively, a rear end and a front end of each supporting module (8).

## Patentansprüche

1. Entfernungsvorrichtung zum Entfernen von Abfallprodukten aus einem Gerät zum Bearbeiten von Profilstäben, wobei die Entfernungsvorrichtung (1; 101) mindestens ein Förderband (2) umfasst, das entlang einer Vorschubrichtung (F) bewegbar ist, um die Abfallprodukte zu einer Entladezone (3) zu befördern, wobei die Entfernungsvorrichtung (1; 101) zudem mindestens zwei Endwalzen (4) umfasst, um die das Förderband (2) gewunden ist, sodass ein oberer Abzweig (5) des Förderbands (2), der zwischen den beiden Endwalzen (4) eingesetzt ist, und ein unterer Abzweig (6) des Förderbands (2), der unter dem oberen Abzweig (5) positioniert ist, definiert werden, wobei eine Stützebene (7) unter dem oberen Abzweig (5) bereitgestellt ist, um den vom Förderband (2) beförderten Abfallprodukten eine Stütze zu bieten, **dadurch gekennzeichnet, dass** das Förderband (2) ein Band umfasst, das aus einem synthetischen Polymermaterial besteht, und dadurch, dass die Stützebene (7) durch eine Vielzahl von Stützmodulen (8) definiert ist, die entlang der Vorschubrichtung (F) nebeneinander positioniert sind, wobei ein jedes Stützmodul (8) ausgelegt ist, um von der Stützebene (7) unabhängig vom angrenzenden Stützmodul (7) entfernt zu werden, und wobei ein jedes Stützmodul (8) mindestens ein Verankerungsprofil umfasst, das in Verbindung mit einem weiteren Verankerungsprofil eines angrenzenden Stützmoduls (8) wirkt, sodass das Stützmodul (8) in Kontakt mit dem angrenzenden Stützmodul (8) gehalten wird, während das Förderband (2) bewegt wird, wobei das Verankerungsprofil mindestens einen Vorsprung (12) umfasst, der sich entlang einer Kante des Stützmoduls (8) quer zur Vorschubrichtung (F) erstreckt, um mit einem Sitz (13) des angrenzenden Stützmoduls (8) in Eingriff zu gelangen.

2. Vorrichtung nach Anspruch 1, wobei ein jedes Stützmodul (8) innenseitig hohl ist und optional mindestens eine Versteifungsrippe (17) umfasst.

3. Entfernungsvorrichtung nach Anspruch 1 oder 2, wobei die Stützmodule (8) eine betretbare Ebene definieren, auf der eine Arbeitskraft stehen kann.

4. Entfernungsvorrichtung nach einem der vorhergehenden Ansprüche, wobei eine erste Walze (4a) der Endwalzen (4) eine motorisierte Walze ist, die in einer Antriebseinheit (19) eingeschlossen ist, und die Antriebseinheit (19) einen Motor (20) umfasst und entfernbar an einer Basis (10) des Geräts zum Bearbeiten von Profilstäben fixierbar ist.

5. Entfernungsvorrichtung nach Anspruch 4, wobei eine zweite Walze (4b) der Endwalzen (4) eine angetriebene Walze ist, die in einer angetriebenen Einheit (23) eingeschlossen ist, wobei die angetriebene Einheit (23) entfernbar an der Basis (10) des Geräts zum Bearbeiten von Profilstäben fixierbar ist.

6. Entfernungsvorrichtung nach einem der vorhergehenden Ansprüche, wobei ein jedes Stützmodul (8) eine fliesenartige Struktur aufweist.

7. Gerät zum Bearbeiten von Profilstäben, umfassend mindestens einen Arbeitskopf zum Bearbeiten eines Profilstabs und ein Stützelement zum Stützen des Profilstabs, während der Profilstab bearbeitet wird, wobei das Gerät zudem eine Entfernungsvorrichtung (1; 101) nach einem der vorhergehenden Ansprüche umfasst, wobei das Förderband (2) der Entfernungsvorrichtung (1; 101) unter dem Stützelement positioniert ist, um die Abfallprodukte aufzunehmen, die erzeugt werden, während der Profilstab bearbeitet wird.

8. Gerät nach Anspruch 7, zudem umfassend eine Basis (10), aufweisend eine Auflagestruktur, um die Stützmodule (8) aufliegend aufzunehmen.

9. Gerät nach Anspruch 8, wobei die Auflagestruktur ein Paar von Auflagekörpern (9) umfasst, die sich parallel zur Vorschubrichtung (F) erstrecken, um jeweils ein rückseitiges Ende und ein vorderseitiges Ende eines jeden Stützmoduls (8) aufliegend aufzunehmen.

## Revendications

1. Dispositif d'enlèvement pour enlever des déchets d'un appareil pour usiner des barres profilées, le dispositif d'enlèvement (1 ; 101) comprenant au moins une bande transporteuse (2) mobile le long d'une direction d'avancement (F) pour transporter les déchets vers une zone de déchargement (3), le dispositif d'enlèvement (1 ; 101) comprenant en outre au moins deux rouleaux d'extrémité (4) sur lesquels la bande transporteuse (2) est enroulée de manière à définir une branche supérieure (5) de la bande transporteuse (2) interposée entre les deux rouleaux d'extrémité (4) et une branche inférieure (6) de la bande transporteuse (2) positionnée en dessous de la branche supérieure (5), un plan de support (7) étant prévu en dessous de la branche supérieure (5) pour assurer le support des déchets transportés par la bande transporteuse (2), **caractérisé en ce que** la bande transporteuse (2) comprend une bande en matériau polymère synthétique, et **en ce que** le plan de support (7) est défini par une pluralité de modules de support (8) positionnés les uns à côté des autres le long de la direction d'avancement (F), chaque module de support (8) étant configuré pour être enlevé du plan de support (7) indépendamment du module de support (7) adjacent, et dans lequel chaque module de support (8) comprend au moins un profil d'ancrage agissant conjointement avec un autre profil d'ancrage d'un module de support (8) adjacent, de sorte que le module de support (8) est maintenu en contact avec le module de support (8) adjacent pendant que la bande transporteuse (2) est déplacée, le profil d'ancrage comprenant au moins une saillie (12) qui s'étend le long d'un bord du module de support (8) transversalement à la direction d'avancement (F) pour venir en prise avec un siège (13) du module de support (8) adjacent.

2. Dispositif selon la revendication 1, dans lequel chaque module de support (8) est creux à l'intérieur et comprend éventuellement au moins une nervure de raidissement (17).

3. Dispositif d'enlèvement selon la revendication 1 ou 2, dans lequel les modules de support (8) définissent un plan de roulement sur lequel un opérateur peut se tenir debout.

4. Dispositif d'enlèvement selon l'une quelconque revendication précédente, dans lequel un premier rouleau (4a) des rouleaux d'extrémité (4) est un rouleau motorisé inclus dans une unité d'entraînement (19), l'unité d'entraînement (19) comprenant un moteur (20) et pouvant être fixée de manière amovible à une base (10) de l'appareil pour usiner des barres profilées.

5. Dispositif d'enlèvement selon la revendication 4, dans lequel un second rouleau (4b) des rouleaux d'extrémité (4) est un rouleau entraîné inclus dans une unité entraînée (23), l'unité entraînée (23) pouvant être fixée de manière amovible à la base (10) de l'appareil pour usiner des barres profilées.

6. Dispositif d'enlèvement selon l'une quelconque revendication précédente, dans lequel chaque module de support (8) a une structure en forme de dalle.

7. Appareil pour usiner des barres profilées, comprenant au moins une tête de travail pour usiner une barre profilée et un élément de support pour supporter la barre profilée pendant que la barre profilée est usinée, l'appareil comprenant en outre un dispositif d'enlèvement (1 ; 101) selon l'une quelconque revendication précédente, la bande transporteuse (2) du dispositif d'enlèvement (1 ; 101) étant positionnée sous l'élément de support pour recevoir les déchets générés pendant que la barre profilée est usinée.

8. Appareil selon la revendication 7, et comprenant en outre une base (10) ayant une structure de repos pour recevoir de manière reposante les modules de support (8).

9. Appareil selon la revendication 8, dans lequel la structure de repos comprend une paire de corps de repos (9) qui s'étendent parallèlement à la direction d'avancement (F) pour recevoir de manière reposante, respectivement, une extrémité arrière et une extrémité avant de chaque module de support (8).
